# EUROPÄISCHE PATENTSCHRIFT

(11) **EP 2 702 909 B1**
(45) Veröffentlichungstag und Bekanntmachung des Hinweises auf die Patenterteilung: **25.05.2016**
(21) Anmeldenummer: 13179276.4
(22) Anmeldetag: 05.08.2013
(51) Int. Cl.: A47J 31/56, A47J 31/54

(54) **Gerät zur Erzeugung von heißem Wasser**
Device for generating hot water
Appareil de production d'eau chaude

(30) Priorität: 03.09.2012 DE 202012103353 U
(43) Veröffentlichungstag der Anmeldung: 05.03.2014
(73) Patentinhaber: Melitta Europa GmbH & Co. KG, 32427 Minden (DE)
(72) Erfinder: Sachtleben, Andreas, 32427 Minden (DE)
(74) Vertreter: Dantz, Jan Henning

(56) Entgegenhaltungen:
- DE-A1- 1 454 006
- DE-A1- 2 353 465
- DE-A1- 10 155 606
- GB-A- 1 482 008
- GB-A- 1 514 583
- GB-A- 2 076 130
- US-A- 4 094 233
- US-A1- 2013 087 049

## Beschreibung

Die Erfindung betrifft ein Gerät zur Erzeugung von heißem Wasser, insbesondere ein Kaffee- oder Teeautomat mit einem Wassertank für Wasser, einem Rohrleitungssystem für das Wasser, einer Heizvorrichtung und einer Sensoreinrichtung zur Detektion eines Wasserstandes in dem Wassertank.

Wasserheizvorrichtungen sind bekannt. So ist in der EP 1 442 688 B1 eine Wasserheizvorrichtung beschrieben mit Schaltmitteln, die in Abhängigkeit von der Wassermenge in einer Wasseraufnahmekammer eine Reaktion auslösen. Ein Sensor erfasst die Wassermenge, bzw. einen minimalen Füllstand in der Wasseraufnahmekammer. Der Sensor umfasst eine Schwimmvorrichtung und ist magnetisch mit den Schaltmitteln gekoppelt. Sinkt nun der Wasserpegel in der Wasseraufnahmekammer auf einen vorbestimmten Wert, so werden mittels der Schaltmittel die Wasserheizmittel in der Wasserheizkammer von einer Niedrigleistungseinstellung in eine Hochleistungseinstellung umgeschaltet.

Die DE 14 54 006 offenbart eine Kaffee-Filtermaschine, die mit einem Schwimmkörper ausgestattet ist, der eine Heizvorrichtung der Kaffee-Maschine bei einem niedrigen Wasserstand ausschalten kann. Der Schwimmer ist dabei mit einer Magnetplatte versehen, die beispielsweise einen Kontaktstab einer Quecksilberschaltröhre nach oben ziehen kann, sodass eine bestehende Stromverbindung unterbrochen wird und die Heizvorrichtung ausgeschaltet ist. Auch ist es dabei möglich anstelle der Quecksilberschaltröhre beispielsweise einen Mikroschalter zu verwenden, der ebenfalls durch den Magnetkörper ausgeschaltet wird.

Die DE 23 53 465 offenbart eine Kaffeemaschine, die einen Schwimmer mit einem Magneten umfasst, der auf den Boden sinkt, wenn der Wasserbehälter entleert ist, sodass ein Quecksilberrelais betätigt wird und der Strom zu einem Wärmetauscher unterbrochen wird.

Aus der DE 20 2006 012 326 U1 ist ein Gerät zur Erzeugung von heißem Wasser, insbesondere für eine Kaffeemaschine, bekannt. Hierbei wird das zu erhitzende Wasser im Wesentlichen nur bei der Entnahme von Wasser erhitzt. Um eine Überhitzung des Heizsystems zu vermeiden und eine Inbetriebnahme nur bei ausreichend hohem Wasserstand zu ermöglichen, ist ein Schwimmer vorgesehen. Der Schwimmer arbeitet mit einem Reed-Schalter zusammen, der nur dann anspricht, wenn ausreichend Wasser in dem Behälter vorhanden ist.

Aus der EP 0 063 849 B1 ist ein Schwimmer mit einem Schalter für eine Kaffeemaschine bekannt. Unter dem Wassertank ist eine zweite Wasserkammer angebracht, in der ein Schwimmerkörper angeordnet ist. Wenn der Wasserstand in der Wasserkammer auf einen minimalen Pegel sinkt, dann wird die elektrische Verbindung zu einer Heizeinrichtung unterbrochen, um eine Überhitzung zu vermeiden. Allerdings ist diese Schwimmerkonstruktion sehr aufwändig durch die separate Wasserkammer unter dem Wassertank.

Aufgabe der Erfindung ist es daher, eine konstruktiv einfache und kostengünstige Lösung für die Detektion des Wasserstandes in einem Gerät zur Erzeugung von heißem Wasser, insbesondere für einen Kaffee- oder Teeautomaten zu entwickeln.

Die Lösung der Aufgabe erfolgt erfindungsgemäß durch die Merkmale des Anspruchs 1.

Ein Gerät zur Erzeugung von heißem Wasser, insbesondere ein Kaffee- oder Teeautomat weist einen Wassertank für Wasser, ein Rohrleitungssystem für das Wasser, eine Heizvorrichtung und eine Sensoreinrichtung zur Detektion eines Wasserstandes in dem Wassertank auf, wobei die Sensoreinrichtung in Abhängigkeit von dem Wasserstand in dem Wassertank an eine Elektronik zur Ansteuerung der Heizvorrichtung ein Signal abgibt. Die Sensoreinrichtung ist als Schwimmerschalter mit einem Sensor und einem Schwimmer ausgebildet ist, wobei der Schwimmerschalter in dem Rohrleitungssystem angeordnet ist. Hierdurch ist eine Ermittlung des Wasserstandes in dem Wassertank ermöglicht, ohne dass Detektionsmitteln in den Wassertank integriert werden. Durch die Unterbringung eines Schwimmschalters in das Rohrleitungssystem kann an einem vom Wassertank getrennten Ort gleichwohl ein Überhitzen der Heizeinrichtung verhindert werden.

Vorzugsweise weist der Schwimmer einen Magneten auf, dessen Magnetfeld von dem Sensor detektiert wird. Dadurch kann über den Magneten auf einfache Weise ein Schaltvorgang durch eine Bewegung des Schwimmers ausgelöst werden.

Der Schwimmerschalter weist dabei ein Schwimmergehäuse aufweist, an oder in dem der Schwimmer bewegbar angeordnet ist, so dass der Schwimmer in einer Auftriebs- oder Abtriebsbewegung geführt ist. An dem Schwimmergehäuse kann dann ein Sensor zur Erfassung einer Position des Schwimmer vorgesehen sein.

Weitere vorteilhafte Ausgestaltungen der Erfindung sind in den Unteransprüchen angegeben.

Ein Ausführungsbeispiel der Erfindung wird nachfolgend anhand der beigefügten Zeichnungen beschrieben. Es zeigen:
- Figur 1: eine Schnittdarstellung einer Kaffeemaschine mit einer Schwimmerschalterkonstruktion gemäß der Erfindung;
- Figur 2: eine perspektivische Darstellung eines Schwimmerschalters gemäß der Erfindung;
- Figur 3: eine vertikale Schnittdarstellung des Schwimmerschalters aus Fig. 2;
- Figur 4: eine vertikale Schnittdarstellung des Schwimmers aus Fig. 3;
- Figur 5: eine Draufsicht auf ein Schwimmergehäuseunterteil;
- Figur 6: eine perspektivische Darstellung des Schwimmergehäuseunterteils aus Fig. 5;
- Figur 7: eine zweite vertikale Schnittdarstellung des Schwimmerschalters aus Fig. 3;
- Figur 8: eine perspektivische Darstellung eines Schwimmergehäuseoberteils;

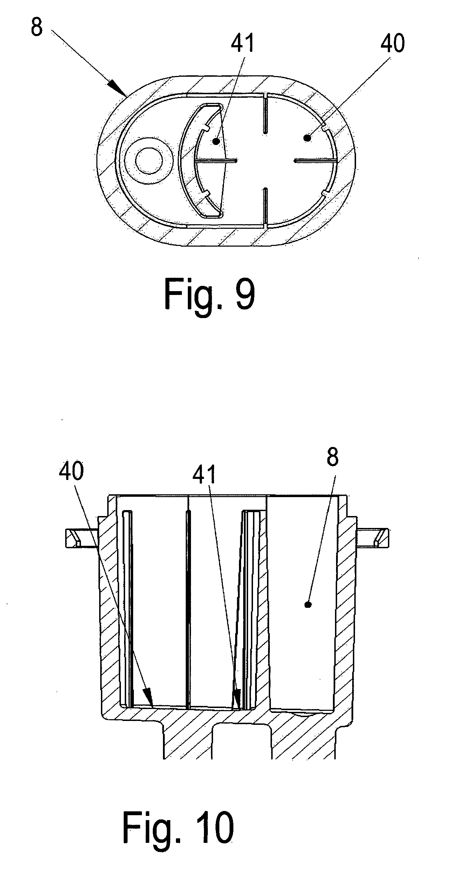

- Figur 9: eine zweite horizontale Schnittdarstellung des Schwimmergehäuseunterteils aus Fig. 5;
- Figur 10: eine vertikale Schnittdarstellung des Schwimmergehäuseunterteils aus Fig. 5;
- Figur 11: eine perspektivische Darstellung des Schwimmergehäuseunterteils;
- Figur 12: einen Ausschnitt aus einer vertikalen Schnittdarstellung des Schwimmergehäuseunterteils;
- Figur 13: eine Schnittdarstellung eines Schwimmerkörpers;
- Figur 14: eine perspektivische Darstellung eines Schwimmerbodens mit einem Magneten.

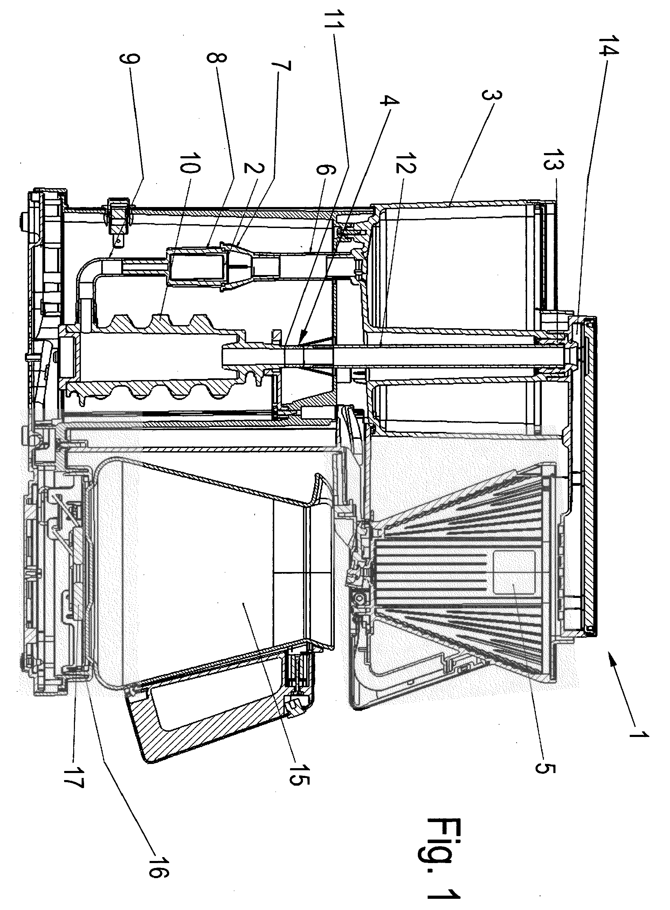

In der Fig. 1 ist eine Kaffeemaschine 1 mit einem erfindungsgemäßen Schwimmerschalter 2 dargestellt. Die Kaffeemaschine 1 weist einen Wassertank 3 auf, in den die zur Kaffeezubereitung gewünschte Menge Wasser eingefüllt wird. An den Wassertank 3 schließt sich ein Schlauch- und/oder Rohrleitungssystem 4 an, um das Wasser einem Filterhalter 5 zuzuführen.

Der direkt von dem Wassertank 3 ausgehende Rohrabschnitt 6 ist mit einem erfindungsgemäßen Schwimmerschalter 2 verbunden. Der Schwimmerschalter 2 weist ein Schwimmergehäuseoberteil 7 und ein Schwimmergehäuseunterteil 8 auf.

Das Schwimmergehäuseunterteil 8 ist mit einem winkelförmigen Rohr 9 mit einer Heizvorrichtung 10 verbunden. An die Heizvorrichtung 10 schließt sich mittels einer Schlauchverbindung 11 ein Steigrohr 12 an. Eine Dichtung 13 verbindet das Steigrohr 12 mit einem Überlauf 14, über das von der Heizvorrichtung 10 erhitzte Wasser in den Filterkörper 5 geleitet wird.

Nach dem Durchlaufen eines Filters in dem Filterhalter 5 gelangt dann die Flüssigkeit in eine Glaskanne 15. Die Glaskanne 15 steht auf einer Warmhalteplatte 16, die von einem Zusatzheizer 17 beheizt wird.

Wie man der Fig. 1 entnehmen kann, ist der Schwimmerschalter 2 unterhalb des Wassertanks 3 innerhalb des Rohrleitungssystems 4 angeordnet und bestimmt die Geometrie des Wassertanks 3 nicht. Dieser kann somit in einfacher Weise gereinigt werden, da eine Detektionseinrichtung zur Ermittlung des Wasserstandes nicht stört. Durch die Integration des Schwimmerschalters 2 in das Rohrleitungssystems ist eine einfache und kostengünstige Konstruktion geschaffen.

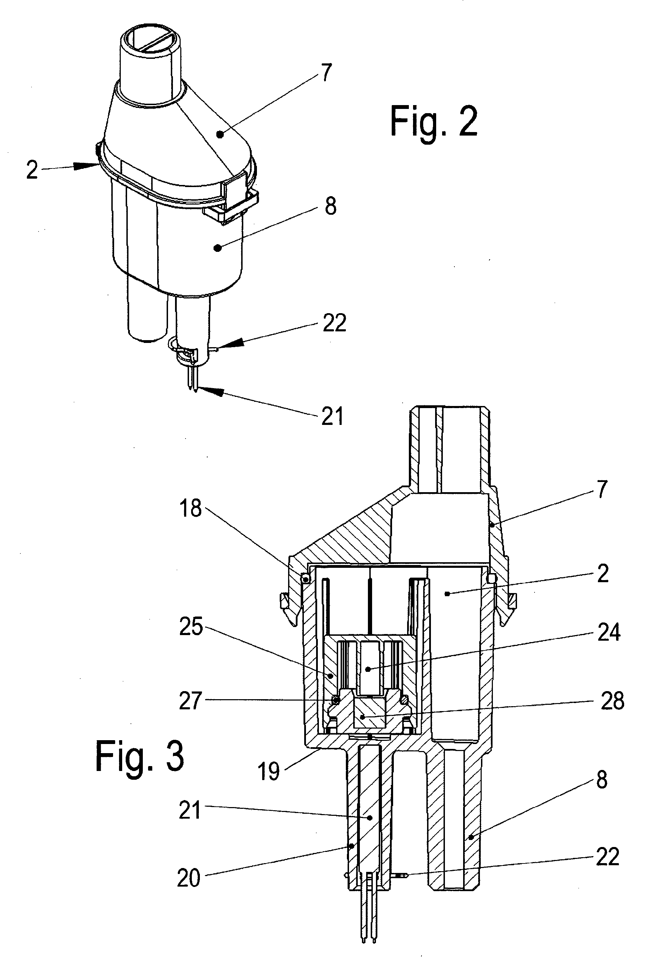

In den Figuren 2 und 3 ist der Schwimmerschalter 2 näher dargestellt. Der Schwimmerschalter 2 umfasst ein Schwimmergehäuse mit einem Schwimmergehäuseoberteil 7 und einem Schwimmergehäuseunterteil 8. Ein Dichtmittel 18 ist zwischen dem Schwimmergehäuseoberteil 7 und dem Schwimmergehäuseunterteil 8 eingefügt und dichtet die beiden Gehäuseteile gegeneinander ab, die mittels einer Rastverbindung miteinander verbunden werden.

In einem an eine Unterseite 19 des Schwimmergehäuseunterteils 8 sich anschließenden röhrenförmigen Fortsatz 20 ist ein Sensor 21 untergebracht. Der Sensor 21 ist in einfacher Weise mittels einer elastischen Klammer oder Feder 22 gegen ein Herausrutschen aus dem röhrenförmigen Fortsatz 20 gesichert.

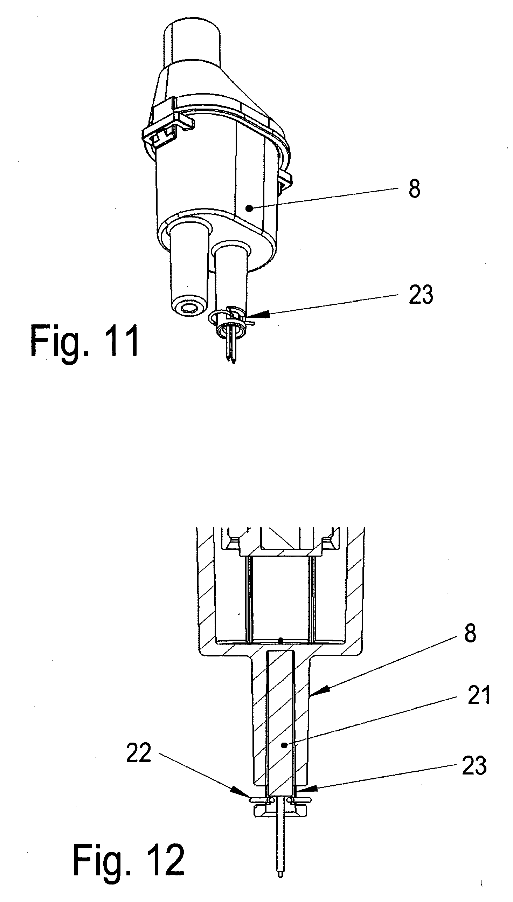

Wie den Fig. 11 und 12 zu entnehmen ist, ist der röhrenförmige Fortsatz 20 für das Einsetzen der elastischen Klammer 22 mit Nuten oder Aussparungen 23 versehen. Der Sensor 21 lässt sich somit in einfacher Weise montieren und dann dauerhaft in seiner Einbauposition sichern.

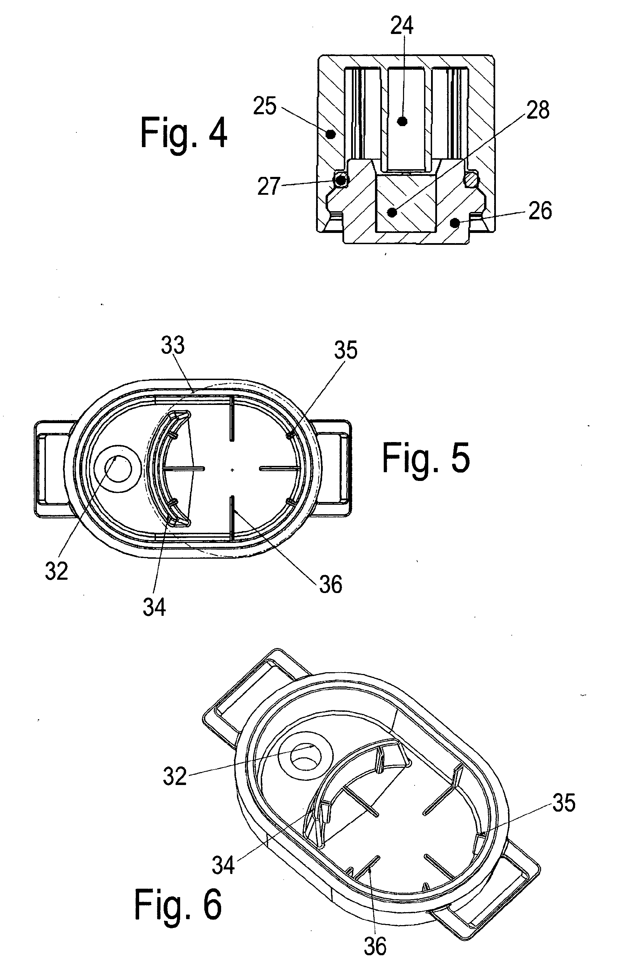

In dem Schwimmergehäuseunterteil 8 befindet sich ein Schwimmer 24. Der in Fig. 4 dargestellte Schwimmer 24 besteht aus einem Schwimmerkörper 25 und einem Schwimmerboden 26. Diese beiden Teile sind mittels einer zylindrischen Rastverbindung miteinander verbunden und einem O-Ring gegen das Eindringen von Wasser geschützt.

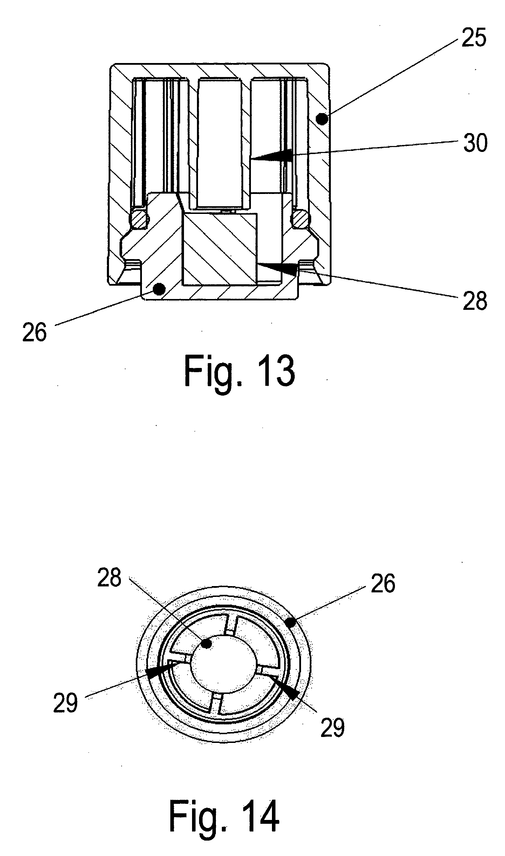

In dem Schwimmerboden 26 ist ein Magnet 28 angeordnet. Wie in Fig. 14 dargestellt, kann dieser Magnet 28 in einfacher Weise in einen vorzugsweise durch kreuzförmig angeordnete Rippen 29 geformten Aufnahmeraum eingelegt werden.

Für die sichere Funktion des Schwimmerschalters 2 darf sich die Position des Magneten 28 nicht ändern. Allerdings reicht für die Arretierung des Magneten 28 die Rastverbindung zwischen Schwimmerkörper 25 und Schwimmerboden 26 aus. Ist die Rastverbindung hergestellt, so befindet sich ein an einer oberen Innenseite des Schwimmerkörpers 25 angeformter Abstandshalter 30 in einer Position mit einem nur geringem Abstand zum Magneten 28, so dass bei einer Verlagerung der Magnet 28 gegen diesen Abstandhalter 30 stößt und damit eine funktionsstörende Verlagerung des Magneten 28 im Schwimmerboden 26 verhindert wird.

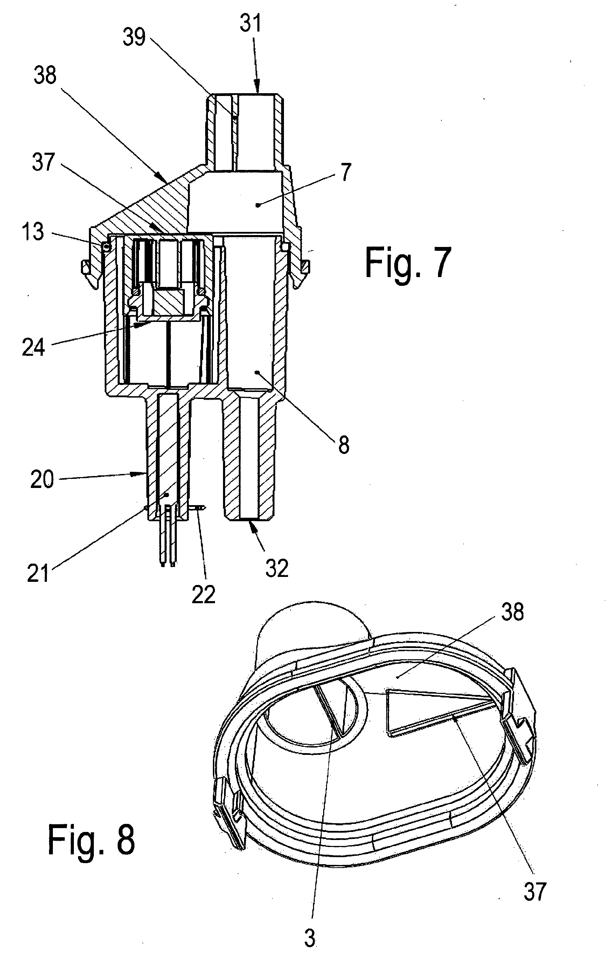

Wie in Fig. 5 und in Fig. 7 dargestellt, besteht der wasserführende Teil des Schwimmerschalters 2 aus einem Zuflussrohr 31, einem Ablaufrohr 32 und einem Schwimmerführungsbereich 33, der ähnlich einem Bypass ausgebildet ist.

Der Schwimmerführungsbereich 33 wird durch eine Gehäusewand des Schwimmergehäuseunterteils 8 und durch ein kreiszylindrisch ausgebildetes Wandsegment 34 gebildet. Dabei weisen sowohl die Gehäusewand als auch das kreiszylindrische Wandsegment 34 schmale, sich vertikal erstreckende Wandrippen 35 auf.

Im Bodenbereich des Schwimmerführungsbereiches 33 befinden sich vorzugsweise vier schmale, sich horizontal erstreckende Bodenrippen 36. Diese Bodenrippen 36 bilden die Auflagefläche für den Schwimmer 24. Hierdurch wird erreicht, dass die Kontaktfläche des Schwimmers 24 mit dem Schwimmergehäuseunterteil 8 minimal ausgebildet ist. Auf diese Weise wird ermöglicht, dass mögliche Adhäsionskräfte zwischen dem Schwimmer 24 und dem Schwimmergehäuseunterteil 8 minimiert sind und damit ein ungestörter Auftrieb des Schwimmers 24 gewährleistet ist.

Für den Herstellungsprozess sind die Bodenrippen 36 und das Wandsegment 34 mit Entformungsschrägen versehen.

In Fig. 3 ist die Situation dargestellt, wenn sich kein Wasser im Wassertank 3 und im Schwimmerschalter 2 befindet. In diesem Fall ist der Abstand zwischen dem Magneten 28 und dem auf das Magnetfeld des Magneten 28 reagierenden Sensors 21 minimal. In dieser Position gibt der Sensor 21 ein entsprechenden Signal an eine hier nicht dargestellte Elektronik für die Heizvorrichtung 10. In diesem Fall bewirkt die Elektronik, dass kein Strom durch die Heizvorrichtung 10 fließt und damit eine Überhitzung des Gerätes bei nicht mehr vorhandenem Wasser verhindert wird.

Wird nun Wasser in den Wassertank 3 eingefüllt, so verteilt sich das Wasser nach dem Prinzip der miteinander kommunizierenden Röhren in dem gesamten Rohrleitungssystem 4 der Kaffeemaschine 1. In diesem Fall ist der Schwimmerschalter 2 gleichfalls mit Wasser gefüllt. Der Schwimmer 24 ist so ausgelegt, dass seine Gesamtdichte geringer als die des Wassers ist. Dadurch erfährt der Schwimmer 24 einen Auftrieb und er bewegt sich in dem Schwimmergehäuseunterteil 8 nach oben.

In der Fig. 7 ist der Schwimmer 24 in dieser oberen Position dargestellt. Der Auftrieb des Schwimmers 24 wird durch eine im Schwimmergehäuseoberteil 7 integrierte Anschlagrippe 37 begrenzt. Dadurch wird erreicht, dass der Schwimmer 24 sich nur im Schwimmerführungsbereich 33 bewegt und sich in der oberen Position nicht verkanten kann.

Für eine sichere Funktion darf der Auftrieb des Schwimmers 24 nicht durch Reibungskräfte mit der Gehäusewand des Schwimmergehäuseunterteils 8 gestört werden. Dies wird durch die Anordnung und Ausbildung der schmalen vertikalen Wandrippen 35 sichergestellt, wobei auch andere Führungsmittel vorgesehen sein können.

Beim Einfüllen von Wasser in die Kaffeemaschine 1 muss sich im wasserführenden Teil des Gerätes sich befindende Luft entweichen. Um das Entweichen der Luft aus dem Schwimmerschalter 2 zu erleichtern, ist ein Wandbereich 38 des Schwimmergehäuseoberteils 7 oberhalb des Schwimmerführungsbereiches 33 kegelförmig ausgebildet. Dieser kegelförmige Wandbereich 38 sorgt dafür, dass bei dem Einfüllen von Wasser und dem damit einhergehenden Aufsteigen des Schwimmers 24 die Luft im Schwimmerschalter 2 leicht nach oben entweichen kann.

Zudem ist zur besseren Ableitung der Luft das Zuflussrohr 31 mit einer Trennrippe 39 verbunden. Dadurch wird erreicht, dass die am kegelförmigen Wandbereich 38 aufsteigende Luft auf der einen Seite der Trennrippe 39 nach oben steigen kann, während das einlaufende Wasser auf der anderen Seite der Trennrippe 39 ungehindert einlaufen kann.

Wenn kein Wasser mehr nachgefüllt wird, so fließt schließlich auch das Wasser aus dem Schwimmerschalter 2 ab. Damit kein Restwasser in dem Schwimmerschalter 2 verbleibt, ist der Boden des Schwimmergehäuseunterteils 8 mit einer schrägen Ablauffläche 40 versehen. Damit auch im Bereich des kreiszylindrischen Wandsegmentes 34 das Wasser abläuft, ist ein der entsprechende Bodenbereich 41 geneigt ausgebildet in Richtung des Wasserablaufs. Damit wird sichergestellt, dass Restwasser im Schwimmschalter 2 immer sicher in Richtung des Ablaufrohres 32 ablaufen kann und somit mikrobiologische Probleme verursacht durch Restfeuchtigkeit vermieden werden.

### Bezugszeichen

- 1: Kaffeemaschine
- 2: Schwimmerschalter
- 3: Wassertank
- 4: Rohrleitungssystem
- 5: Filterhalter
- 6: Rohrabschnitt
- 7: Schwimmergehäuseoberteil
- 8: Schwimmergehäuseunterteil
- 9: Rohr
- 10: Heizvorrichtung
- 11: Schlauchverbindung
- 12: Steigrohr
- 13: Dichtung
- 14: Überlauf
- 15: Glaskanne
- 16: Warmhalteplatte
- 17: Zusatzheizer
- 18: Dichtmittel
- 19: Unterseite
- 20: röhrenförmiger Fortsatz
- 21: Sensor
- 22: Klammer
- 23: Aussparungen
- 24: Schwimmer
- 25: Schwimmerkörper
- 26: Schwimmerboden
- 27: O-Ring
- 28: Magnet
- 29: Rippen
- 30: Abstandhalter
- 31: Zuflussrohr
- 32: Ablaufrohr
- 33: Schwimmerführungsbereich
- 34: Wandsegment
- 35: Wandrippen
- 36: Bodenrippen
- 37: Anschlagrippe
- 38: Wandbereich
- 39: Trennrippe
- 40: Ablauffläche
- 41: Bodenbereich

## Patentansprüche

1. Gerät zur Erzeugung von heißem Wasser, insbesondere ein Kaffee- oder Teeautomat mit einem Wassertank (3) für Wasser, einem Rohrleitungssystem (4) für das Wasser, einer Heizvorrichtung (10) und einer Sensoreinrichtung zur Detektion eines Wasserstandes in dem Wassertank (3), wobei die Sensoreinrichtung in Abhängigkeit von dem Wasserstand in dem Wassertank (3) an eine Elektronik zur Ansteuerung der Heizvorrichtung (10) ein Signal abgibt, wobei die Sensoreinrichtung als Schwimmerschalter (2) mit einem Sensor (21) und einem Schwimmer (24) ausgebildet ist und der Schwimmerschalter (2) in dem Rohrleitungssystem (4) angeordnet ist, und der Schwimmerschalter (2) ein Schwimmergehäuse (7, 8) aufweist, an oder in dem der Schwimmer (24) angeordnet ist. **dadurch gekennzeichnet, dass** ein Schwimmergehäuseoberteil (7) einen kegelförmigen Wandbereich (38) aufweist, der sich nach oben verjüngt und an der Innenseite des kegelförmigen Wandbereiches (38) ein Anschlag (37) für den Schwimmer (24) vorgesehen ist.

2. Gerät nach Anspruch 1, **dadurch gekennzeichnet, dass** der Schwimmer (24) einen Magneten (28) aufweist, dessen Magnetfeld von dem Sensor (21) detektiert wird.

3. Gerät nach Anspruch 1 oder 2, **dadurch gekennzeichnet, dass** das Schwimmergehäuse ein Schwimmergehäuseoberteil (7) und ein Schwimmergehäuseunterteil (8) aufweist.

4. Gerät nach Anspruch 3, **dadurch gekennzeichnet, dass** ein Dichtmittel (18) zur wasserdichten Verbindung von Schwimmergehäuseoberteil (7) mit dem Schwimmergehäuseunterteil (8) vorgesehen ist.

5. Gerät nach einem oder mehreren der Ansprüche 1 bis 4, **dadurch gekennzeichnet, dass** der Sensor (21) in einem röhrenförmigen Fortsatz (20) des Schwimmergehäuses angeordnet ist und mit einer elastischen Klammer (22) gesichert ist.

6. Gerät nach einem oder mehreren der Ansprüche 1 bis 5, **dadurch gekennzeichnet, dass** der Schwimmer (24) aus einem Schwimmerkörper (25) und einem Schwimmerboden (26) besteht.

7. Gerät nach Anspruch 6, **dadurch gekennzeichnet, dass** der Schwimmerboden (26) einen Aufnahmeraum für den Magneten (28) aufweist.

8. Gerät nach Anspruch 6 oder 7, **dadurch gekennzeichnet, dass** der Schwimmerkörper (25) einen Abstandshalter (30) aufweist zur sicheren Positionierung des Magneten (28).

9. Gerät nach einem oder mehreren der Ansprüche 1 bis 8, **dadurch gekennzeichnet, dass** das Schwimmergehäuseunterteil (8) im Bodenbereich mit Vorsprüngen oder Bodenrippen (36) versehen ist als Auflagefläche für den Schwimmer (24).

10. Gerät nach einem oder mehreren der Ansprüche 1 bis **9, dadurch gekennzeichnet, dass** Wandrippen (35) an der Innenfläche des Schwimmergehäuseunterteils (8) angeformt sind.

11. Gerät nach einem oder mehreren der Ansprüche 1 bis 10, **dadurch gekennzeichnet, dass** das Schwimmergehäuseoberteil (7) ein Zuflussrohr (31) mit einer Trennrippe (39) aufweist für das Entweichen der Luft beim Einfüllen von Wasser.

12. Gerät nach einem oder mehreren der Ansprüche 1 bis 11, **dadurch gekennzeichnet, dass** der Schwimmerschalter (2) unterhalb des Wassertanks (3) angeordnet ist.

## Claims

1. Apparatus for producing hot water, particularly a coffee or tea machine, with a water tank (3) for water, a pipe duct system (4) for the water, a heating device (10) and a sensor device for detection of a water state in the water tank (3), wherein the sensor device in dependence on the water state in the water tank (3) delivers a signal to an electronic system for controlling the heating device (10), wherein the sensor device is constructed as a float switch (2) with a sensor (21) and a float (24) and the float switch (2) is arranged in the pipe duct system (4), and the float switch (2) has a float housing (7, 8) at or in which the float (24) is arranged, **characterised in that** a float housing upper part (7) has a conical wall region (38) which tapers upwardly and an abutment (37) for the float (24) is provided at the inner side of the conical wall region (38).

2. Apparatus according to claim 1, **characterised in that** the float (24) has a magnet (28), the magnetic field of which is detected by the sensor (21).

3. Apparatus according to claim 1 or 2, **characterised in that** the float housing has a float housing upper part (7) and a float housing lower part (8).

4. Apparatus according to claim 3, **characterised in that** a sealing means (18) for watertight connection of the float housing upper part (7) with the float housing lower part (8) is provided.

5. Apparatus according to one or more of claims 1 to 4, **characterised in that** the sensor (21) is arranged in a tubular extension (20) of the float housing and is secured by a resilient clip (22).

6. Apparatus according to one or more of claims 1 to 5, **characterised in that** the float (24) consists of a float body (25) and a float base (26).

7. Apparatus according to claim 6, **characterised in that** the float base (26) has a receiving space for the magnet (28).

8. Apparatus according to claim 6 or 7, **characterised in that** the float body (25) has a spacer (30) for secure positioning of the magnet (28).

9. Apparatus according to one or more of claims 1 to 8, **characterised in that** the float housing lower part (8) is provided in the base region with projections or base ribs (36) as a support surface for the float (24).

10. Apparatus according to one or more of claims 1 to 9, **characterised in that** wall ribs (35) are formed at the inner surface of the float housing lower part (8).

11. Apparatus according to one of more claims 1 to 10, **characterised in that** the float housing upper part (7) has an inflow pipe (31) with a separating rib (39) for the escape of air at the time of filling with water.

12. Apparatus according to one or more of claims 1 to 11, **characterised in that** the float switch (2) is arranged below the water tank (3).

## Revendications

1. Appareil de production d'eau chaude, en particulier machine à thé ou à café automatique comprenant un réservoir d'eau (3), un système de conduite tubulaire (4) de circulation d'eau, un dispositif de chauffage (10) et un dispositif de capteur pour permettre de détecter l'état de l'eau dans le réservoir l'eau (3), dans lequel le dispositif de capteur délivre, un signal à une électronique permettant de commander le dispositif de chauffage (10) en fonction de l'état de l'eau dans le réservoir à eau (3), le dispositif de capteur étant réalisé sous la forme d'un commutateur à flotteur (2) comprenant un capteur (21) et un flotteur (24), le commutateur à flotteur (2) étant monté dans le système de conduite tubulaire (4), et le commutateur à flotteur (2) comprenant un boîtier de flotteur (7, 8) sur ou dans lequel est monté le flotteur (24),
**caractérisé en ce que**
la partie supérieure (7) du boîtier de flotteur comprend une zone de paroi (38) en forme de cône qui s'amincit vers le haut et, sur la face interne de la zone de paroi (38) en forme de cône est prévue une butée (37) pour le flotteur (24).

2. Appareil conforme à la revendication 1,
**caractérisé en ce que**
le flotteur (24) comprend un aimant (28) dont le champ magnétique est détecté par le capteur (21).

3. Appareil conforme à la revendication 1 ou 2,
**caractérisé en ce que**
le boîtier du flotteur comprend une partie supérieure de boîtier de flotteur (7) et une partie inférieure de boîtier de flotteur (8).

4. Appareil conforme à la revendication 3,
**caractérisé en ce qu'**
il est prévu un joint d'étanchéité (18) pour permettre la liaison étanche à l'eau de la partie supérieure du boîtier du flotteur (7) avec la partie inférieure du boîtier du flotteur (8).

5. Appareil conforme à l'une ou à plusieurs des revendications 1 à 4,
**caractérisé en ce que**
le capteur (21) est monté dans un prolongement tubulaire (20) du boîtier du flotteur et est bloqué par une bride de fixation élastique (22).

6. Appareil conforme à l'une ou à plusieurs des revendications 1 à 5,
**caractérisé en ce que**
le flotteur (24) est constitué d'un corps de flotteur (25) et d'un fond de flotteur (26).

7. Appareil conforme à la revendication 6,
**caractérisé en ce que**
le fond du flotteur (26) comprend un volume de réception des aimants (28).

8. Appareil conforme à la revendication 6 ou 7,
**caractérisé en ce que**
le corps du flotteur (25) comprend un élément d'écartement (30) pour permettre un positionnement sur des aimants (28).

9. Appareil conforme à l'une ou à plusieurs des revendications 1 à 8,
**caractérisé en ce que**
la partie inférieure du boîtier du flotteur (8) est équipée dans sa zone de fond de saillies ou de nervures (36) constituant des surfaces d'appui du flotteur (24).

10. Appareil conforme à l'une ou à plusieurs des revendications 1 à 9,
**caractérisé en ce que**
des nervures de parois (35) sont formées sur la surface interne de la partie inférieure (8) du boîtier du flotteur.

11. Appareil conforme à l'une ou à plusieurs des revendications 1 à 10,
**caractérisé en ce que**
la partie supérieure (7) du boîtier du flotteur est équipée d'un tube d'écoulement (31) muni d'une nervure de séparation (39) pour permettre le dégagement de l'air lors du remplissage par de l'eau.

12. Appareil conforme à l'une ou à plusieurs des revendications 1 à 11,
**caractérisé en ce que**
le commutateur à flotteur (2) est situé au-dessous du réservoir d'eau (3).
